# EUROPEAN PATENT APPLICATION

(11) **EP 4 427 869 A1**
(43) Date of publication of application: **11.09.2024**
(21) Application number: 23160388.7
(22) Date of filing: 07.03.2023
(51) Int. Cl.: B23B 29/04, B23B 31/10, G01B 5/012

(54) **A MACHINE TOOL ACCESSORY**

(71) Applicant: Renishaw PLC, Wotton-under-Edge, Gloucestershire GL12 8JR (GB)
(72) Inventor: HOLMES, Mark, James, Andrew, Wotton-under-Edge, Gloucestershire, GL12 8JR (GB); LUMMES, Stephen, Edward, Wotton-under-Edge, Gloucestershire, GL12 8JR (GB)
(74) Representative: Dunn, Paul Edward

(57) **Abstract**

A machine tool accessory (40), such as a measurement probe, for attachment to a machine tool shank (20) is described. The accessory comprises a housing (42) having a connector portion (44) that enables the housing (42) to be secured to a machine tool shank (20). The connector portion (44) comprises a surface (48; 81) having one or more raised contact faces (50,52; 82, 84) for engaging with a substantially flat surface (28) of the machine tool shank (20). In one example, the first and second raised contact faces (50,52; 82, 84) are provided in the form of concentric annuli.

## Description

The present invention relates to machine tool accessories and in particular to providing improved mechanical attachment of a machine tool accessory to a machine tool shank.

It is known to mount machine tool accessories, such as measurement probes, to machine tool shanks (which are herein also termed "shanks") that can be automatically loaded into and held by the spindle of a machine tool. This allows various cutting tools and accessories to be loaded into a machine tool spindle, as and when required, to perform cutting or measuring operations on a workpiece. In particular, the selection of different cutting tools and accessories can be performed automatically by appropriate programming of the numerical controller of the machine tool.

Many different types of machine tool exist for different machining applications and these can vary significantly in size. For example, machine tools exist that are designed to cut workpieces that range in size from miniature components (e.g., for watch mechanisms or the like) to large components for heavy industry (e.g., mining or aeronautical equipment). Consequently, shanks are provided in a range of sizes with larger shanks being capable of carrying the larger cutting forces used in the larger machine tools.

A measurement probe intended for use with a machine tool typically comprises a cylindrical housing having a proximal end comprising a machined flat surface with a central pull stud. The shank includes a recess that receives the pull stud and a clamping mechanism that pulls the pull stud into the shank. The applied clamping force urges the machined flat surface of the measurement probe into tight contact with the ground flat surface of the shank to align and secure the measurement probe to the shank.

The present inventors have found that the known shank attachment arrangement does not always provide the secure attachment and alignment that is necessary to ensure accurate measurements can be reliably collected by each measurement probe. For example, the machined flat surface of the housing that engages the flat surface of the shank may not always be completely flat and hence it has been found that a measurement probe can sometimes "rock" slightly about high points on that surface. This can introduce measurement errors when using the measurement probe.

According to a first aspect of the present invention, there is provided a machine tool accessory, comprising a housing having a connector portion that enables the housing to be secured to a machine tool shank, characterised in that the connector portion comprises a surface having one or more raised contact faces for engaging with a substantially flat surface of the machine tool shank.

The present invention thus provides an improved way to attach a machine tool accessory, such as a measurement probe, to a shank that can be inserted into the spindle of a machine tool. The machine tool accessory includes a housing having a connector portion that enables the housing to be secured to the machine tool shank. In a preferred embodiment, the housing is substantially cylindrical and a proximal end of the machine tool accessory includes the connector portion that allows it to be secured to the machine tool shank.

The present invention is characterised by including a connector portion that comprises a surface having one or more raised contact faces for engaging (i.e., contacting) a substantially flat surface of the machine tool shank. The one or more raised contact faces protrude from, i.e., rise above or stand proud of, the surrounding surface. The one or more raised contact faces thus form only a part of the surface of the connector portion. As explained below, the contact faces are preferable substantially flat. This means that only the contact face(s) can make physical contact with the flat surface of an associated tool shank, and the rest of the surface of the connector portion will not directly contact the machine tool shank.

The present invention has a number of advantages. For example, a reduced area of contact is provided between the substantially flat surface of the machine tool shank and the one or more contact faces of the connector portion compared with prior art arrangements. The raised contact face(s) thus define the alignment of the machine tool accessory to the substantially flat surface of the machine tool shank, reducing the potential for misalignment and other unwanted effects that might otherwise arise if the whole surface of the connector portion was required to be flat. If the machine tool accessory is a measurement probe, this arrangement improves the accuracy and/or repeatability of acquired measurements.

It should be noted that tool shanks are designed to handle the large cutting forces that typically occur when they hold a cutting tool during a cutting operation. A machine tool accessory does not typically apply anywhere near the force that is applied a cutting tool. This means that providing a reduced contact area, i.e., by providing the raised contact face(s), does decrease the load that can be transmitted via the connector portion, but this has been found to be acceptable when carrying a machine tool accessory.

Advantageously, the one or more raised contact faces comprise a first raised contact face. The first raised contact face may extend circumferentially around a housing axis of the housing. For example, if the housing is cylindrical the housing axis may comprise the longitudinal axis of the cylindrical housing. The first raised contact face is preferably radially separated from the housing axis by a first radial distance. In other words, the first raised contact face provided on the surface of the connector portion may be radially spaced apart from the housing axis by the first radial distance. The first raised contact face conveniently protrudes from the surrounding surface by a first height. In other words, the first raised contact face is proud of the surrounding surface by the first height. It should be noted that the term "height" is used herein to define a distance a contact face extends from a surrounding surface and does not require that surface or face to be in any particular orientation relative to the ground.

In a preferred embodiment, the first raised contact face comprises an annulus. In other words, the first raised contact face preferably comprises a continuous, ringshaped (circular or annular) face that protrudes from the surrounding surface. The annulus that provides the first raised contact face may be concentric with the longitudinal axis of a cylindrical housing. In this manner, the first raised contact face engages the flat surface of tool shank around a full 360° thus ensuring a mechanically stable physical connection is maintained irrespective of the direction of any force applied to the machine tool accessory.

The first raised contact face could be formed from multiple contact face portions instead of being a continuous annulus. Conveniently, the first raised contact face could thus comprise a plurality of first contact face portions. These first contact face portions (which together make up the first raised contact face) may be circumferentially spaced apart around the housing axis. In other words, the first raised contact face could be a non-continuous or segmented contact face. Regions located between the first contact face portions will thus be recessed compared to the first contact face portions. Circumferentially spacing apart the first contact face portions from each other provides a stable mechanical configuration.

Advantageously, the first raised contact face is configured to engage a substantially flat surface of a first machine tool shank that has a first radius. In other words, the location and/or dimensions of the first raised contact face may be selected to enable a physical connection to a first machine tool shank of a certain size (e.g., having a first radius). In this manner, physical attachment of the machine tool accessory to a first machine tool shank may be provided.

Advantageously, the one or more raised contact faces comprise a second raised contact face. The second raised contact face may extend circumferentially around the housing axis. The second raised contact face is preferably radially separated from the housing axis by a second radial distance. The second raised contact face conveniently protrudes from the surrounding surface by a second height. The second radial distance is preferably greater than the first radial distance. The second height is preferably greater than the first height. Other (non-contact) faces may be provided between the first and second contact faces. These other (non-contact) faces may be appropriately angled to avoid steps in the surface profile or to simplify the machining process that is used to form the surface.

In this manner, the second raised contact face is located further out from the housing axis (i.e., at a greater radial distance) than the first raised contact face. The second raised contact face can also protrude further from the surrounding surface than the first raised contact face. This allows a larger tool shank to contact the second raised contact face alone (i.e., without also contacting the first raised contact face). In this manner, the machine tool accessory can be physically attached to the shank as close to the periphery of the machine tool accessory as possible. This helps ensure the physical attachment of the machine tool accessory to the shank is as stable as possible.

In a preferred embodiment, the second raised contact face comprises an annulus. The first and second raised contact faces may thus comprise first and second annuli. The first and second annuli may be concentric. The first and second annuli may also be concentric with the housing axis, which may be the longitudinal axis of a cylindrical housing.

Instead of an annulus, the second raised contact face may be provided by multiple contact face portions. Advantageously, the second raised contact face thus comprises a plurality of second contact face portions. These second contact face portions may be circumferentially spaced apart around the housing axis. These second contact face portions may be arranged in a similar, or different, pattern to contact face portions that provide the first raised contact face. It would also be possible for an annulus to provide one of the first or second raised contact faces, with a plurality of contact face portions providing the other raised contact face.

In a preferred embodiment, the connector portion of the machine tool accessory is adapted for attachment to a plurality of differently sized tool shanks. For example, the surface of the connector portion may include a plurality of sets of raised contact faces, with each set of raised contact faces being configured to engage a tool shank of a different dimension. As mentioned above, a first raised contact face may be configured to engage a substantially flat surface of a first machine tool shank having a first radius. A second raised contact face may also be provided that is configured to engage a substantially flat surface of a machine tool shank having a second radius. The second radius may be greater than the first radius. In other words, the second raised contact face may be configured to engage a larger tool shank (e.g., a tool shank with a larger diameter) than the first raised contact face. Although the examples provided herein describe the use of two different contact faces for two differently sized tool shanks, it would of course be possible to include further (e.g., third, fourth etc) contact faces for further tool shanks of different sizes.

As explained above, the one or more raised contact faces engage with, and align the machine tool accessory relative to, a substantially flat surface of the machine tool shank. An appropriate mechanism may also be provided that acts to urge those surfaces together and ensure they remain engaged during use. For example, the connector portion may include a protrusion for engagement with a shank to thereby urge the surface of the connector portion into engagement with the substantially flat surface of the machine tool shank. Advantageously, the connector portion includes a protrusion (e.g., a pull stud) for engagement with a clamping mechanism provided at the machine tool shank. If a cylindrical housing is provided, the protrusion may be located centrally (e.g., on the longitudinal axis of the cylindrical housing). The clamping mechanism is preferably configured to urge the surface of the connector portion into engagement with the substantially flat surface of the machine tool shank. The clamping mechanism may include one or more screws (e.g., conically tipped screws) that pass through threaded channels in the tool shank and engage the protrusion (pull stud) of the connector portion. Alternatively, the connector portion may include an externally threaded protrusion for engagement with an internally threaded recess of a shank. In this manner, the machine tool accessory may be screwed onto a shank (e.g., using a certain applied torque). It would also be possible to use a variety of other clamping mechanisms.

The housing of the machine tool accessory may have any suitable shape. For example, the housing may be rectangular, square etc. Preferably, the housing comprises a substantially cylindrical housing. The substantially cylindrical housing may have the same diameter along its length. Alternatively, the diameter of the substantially cylindrical housing may vary along its length. For example, it may reduce in diameter (e.g., reducing in steps or taper) from the proximal end to the distal end. Conveniently, the connector portion is provided on the proximal end of the substantially cylindrical housing. The surface of the connector portion may extend perpendicularly to the longitudinal axis of the substantially cylindrical housing. In particular, the one or more contact faces may be perpendicular to the longitudinal axis of the housing. The surface of the connector portion may thus be substantially circular, if the proximal part of the housing is cylindrical. The housing may be formed as a single, unitary, housing. Alternatively, the housing may be formed as a plurality of parts or modules that can be disassembled, if required. For example, the housing may be a two-part housing that can be unscrewed to access the internal space within the housing (e.g., to allow batteries to be replaced). In such a case, the connector portion may remain firmly secured to the shank whilst a more distal part of the housing is removed (e.g., unscrewed) to allow access to the inside of the housing.

As noted above, the one or more raised contact faces are provided as a part of the surface of the connector. The surface area of the one or more raised contact faces may comprise less than 75% of the entire surface of the connector. Alternatively, the surface area of the one or more raised contact faces may comprise less than 50% of the entire surface of the connector. Alternatively, the surface area of the one or more raised contact faces may comprise less than 25% of the entire surface of the connector.

The machine tool accessory may include any of the standard accessory components that are mounted to a machine tool. The machine tool accessory may not include a cutting tool. The machine tool accessory may comprise a measurement sensor. The measurement sensor may comprise a tactile sensor (e.g., a transducer and deflectable stylus for contacting a workpiece). The measurement sensor may comprise a non-contact sensor (e.g., an optical, inductive etc sensor). If configured to acquire measurements of the workpiece, the machine tool accessory may be termed a measurement probe. The machine tool accessory and/or the machine tool shank may include adjustment means for altering the lateral position of the machine tool accessory relative to the tool shank. For example, an on-centre adjustment mechanism may be provided.

The present invention also extends to a kit that comprises the machine tool accessory described above and at least one machine tool shank that is configured to be attached to the connector portion of the machine tool accessory. The kit may include a plurality of machine tool shanks. Such machine tool shanks may be of different sizes (diameters). The machine tool shanks may be configured to an international, national or machine tool builder specification. The at least one machine tool shank may comprise a ground, substantially flat surface for engaging the one or more raised contact faces of the surface of the connector portion of the machine tool accessory.

The invention will now be described, by way of example only, with reference to the accompanying drawings in which;
Figure 1 shows a prior art measurement probe,
Figure 2 shows a known (prior art) machine tool shank,
Figure 3 shows a prior art measurement probe attached to a machine tool shank,
Figure 4 shows a measurement probe of the present invention,
Figure 5 highlights the raised surface of the measurement probe of figure 4 that is used to engage a large shank.
Figure 6 shows the measurement probe of figure 4 when attached to a small shank,
Figure 7 illustrates a cross-section through the proximal surface of the probe housing of the measurement probe shown in figure 4, and
Figure 8 shows an alternative connector portion of the present invention.

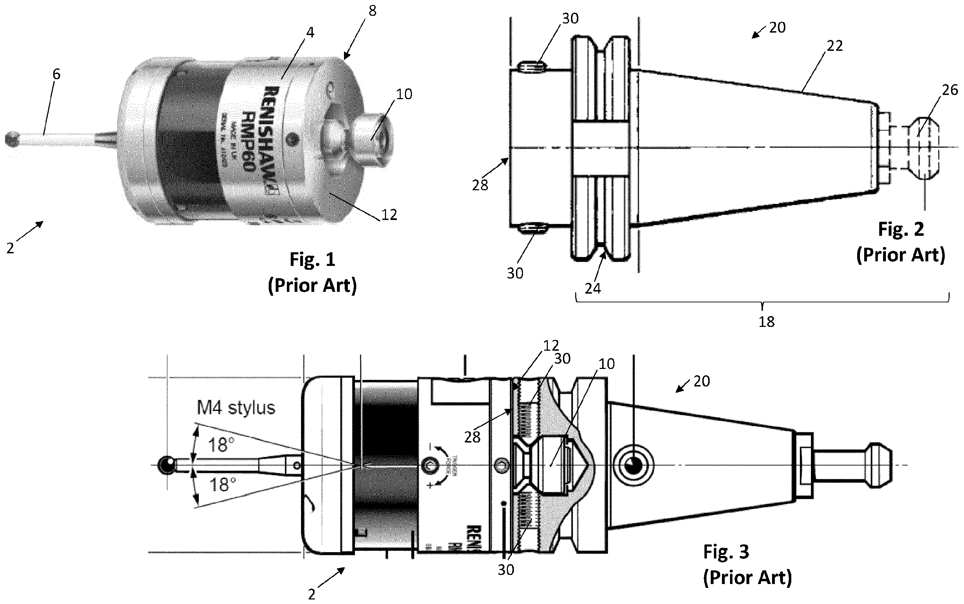

Referring to figure 1, there is illustrated in a perspective view a machine tool measurement probe 2 that is sold under the product name RMP60 by Renishaw plc, Wotton-Under-Edge, UK. The measurement probe 2 includes a substantially cylindrical probe housing 4 having a diameter of 60mm with a stylus 6 protruding from its distal end. The proximal end 8 of the probe housing 4 is configured to be attached to a machine tool shank (not shown in figure 1). In other words, the proximal end 8 includes a first pull stud 10 that is surrounded by a nominally flat surface 12 of the probe housing.

Figure 2 illustrates a shank 20 that can carry a cutting tool or a measurement accessory (not shown in figure 2). The proximal end 18 of the shank 20 includes a tapered surface 22, a grooved flange 24 and a second pull stud 26. The features provided at the proximal end 18 of the shank are configured to allow the shank to be attached to a machine tool spindle. The grooved flange 24 also allows the shank to be loaded into a machine tool spindle using an automated tool change apparatus. In this case, the illustrated shank is a standard BT-type shank but shanks that conform to other international or local standards or even to non-standard machine builder specifications could be used instead. The shank 20 also has a flat surface 28 provided at its distal end. This flat surface 28 is typically formed from hardened steel using a high precision grinding process (i.e., so it is typically flat within tightly defined tolerances). Although not visible in figure 2, the centre of the flat surface 28 includes a recess for receiving the first pull stud 10 of a measurement probe as shown in figure 1. Screws 30 are also provided through the shank which can engage the first pull stud 10 and thereby pull the nominally flat surface 12 of the measurement probe shown in figure 1 into tight engagement with the flat surface 28 of the shank 20.

Figure 3 illustrates the measurement probe 2 attached to the shank 20. A cut-through view of the first pull stud 10 located within the recess of the shank 20 is shown, along with the conically tipped screws 30 that act on a groove formed in the first pull stud 10 to urge the measurement probe 2 towards the shank 20. The flat surface 12 of the measurement probe 2 is thus urged into contact with the flat surface 28 of the shank 20.

As explained above, the present inventors have found various disadvantages exist with this prior art arrangement. In particular, if either of the flat surfaces 12 or 28 are not sufficiently flat then they may "rock" relative to one another when urged into engagement. It should be noted in this regard that the grinding process used to provide the flat surface 28 of hardened steel provided on the shank 28 does typically ensure a highly flat surface. The machining (cutting) process used to form the flat surface 12 on the housing of the measurement probe 2 is more likely to provide a surface that deviates from the required level of flatness. This deviation from flatness can introduce errors to any positional measurements that are acquired by the measurement probe 2 because any rocking motion of the measurement probe 2 relative to the shank 20 will alter the position of the measurement probe 2 in an unknown and unpredictable way.

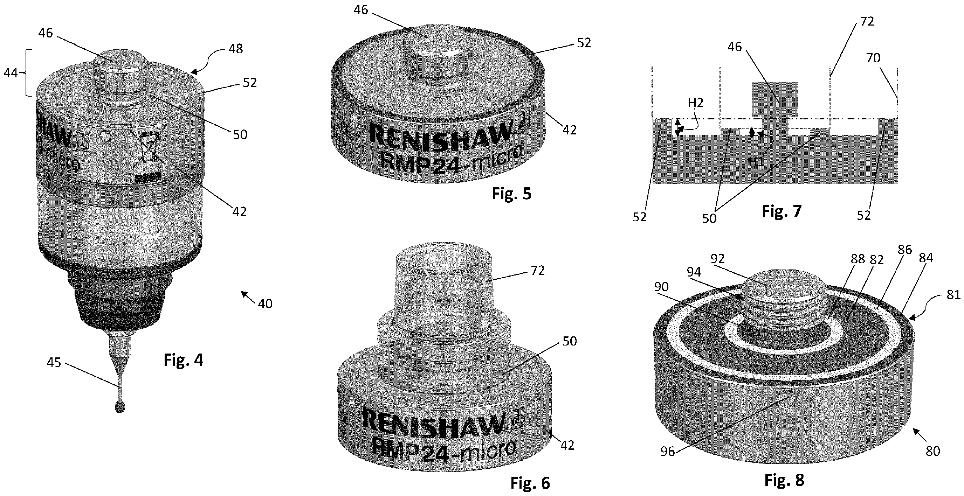

Referring to figure 4, there is illustrated a measurement probe 40 of the present invention. The measurement probe 40 comprises a cylindrical housing 42 that tapers down to a stylus 45. The maximum outer diameter of the probe housing is 24mm (i.e., less than half the diameter of the prior art measurement probe illustrated in figures 1 and 3 above). Such a measurement probe is suited for smaller machine tools, where the shank diameter may be even less than the 24mm diameter of the measurement probe 40.

The proximal end of the measurement probe 40 is provided as a connector portion 44 that allows it to be attached to a shank. A central pull stud 46 is surrounded by a radially extending surface 48. A first annular contact face 50 is provided on the surface 48 near and concentric with the pull stud 46. This first annular contact face 50 is raised from the surrounding surface by a first height (H1). A second annular contact face 52 is provided near the edge of the surface 48. This second annular contact face 52 is raised from the surrounding surface by a second height (H2) which is greater than the first height (H1).

Referring to figures 5 and 7, the second annular contact face 52 of the surface 48 is highlighted. This second annular contact face 52 will contact the flat surface of a shank 70 having a diameter equal to or greater than the 24mm diameter of the measurement probe 40. It is noted the first annular contact face 50 does not contact the shank 70 because the height H1 of the first annular contact face 50 is less than the height H2 of the second annular contact face 52.

Referring to figures 6 and 7, the first annular contact face 50 of the surface 48 is highlighted. This first annular contact face 50 will contact the flat surface of a shank 72 having a diameter of around 15mm (i.e., less than the 24mm diameter of the measurement probe 40).

Referring to figure 8, an alternative connector portion 80 for a measurement probe is illustrated. The connector portion 80 is again provided at the proximal end of the probe housing, but the remainder of the probe is not shown in figure 8. As per the embodiments described above, the connector portion 80 is configured for attachment to a machine tool shank.

The connector portion 80 comprises a surface 81 that surrounds a central cylindrical protrusion 92 that comprises an outer screw-thread 94. The surface 81 includes a first annular contact face 82 of a height H1 and a second annular contact face 84 of a height H2. The second annular contact face 84 extends further upwards than the first annular contact face 82. The surface 81 also includes a central thread-undercut region 90, under the periphery of the central cylindrical protrusion 92, which has a height less than height H1. A first angled surface 88 connects the thread-undercut region 90 to the higher first annular contact face 82. A second angled surface 86 connectors the first annular contact face 82 to the (higher) second annular contact face 84. This arrangement can conveniently be machined (turned using a lathe) using a single cutting tool.

The connector portion 80 can be attached (i.e., screwed) onto a shank having a central, internally threaded recess. The flat surface of the shank will then engage either the first annular contact face 82 or the second annular contact face 84, depending on the shank radius. A set of features (e.g., including the illustrated feature 96) may be provided around the housing to allow a spanner (e.g., a torque controller spanner) to screw the connector portion 80 onto the associated shank.

The arrangement of the present invention thus provides a pair of raised annular contact faces for contacting shanks of different sizes. The use of an annular contact face, instead of a larger area of the surface, reduces the possibility that there will be deviations in the shape of the surface (e.g., local humps) that would allow the measurement probe to move (rock) after being attached to the machine tool shank. Providing an annulus on the probe housing near the periphery of the associated shank, even when the shanks are different sizes, also provides the maximum stabilisation for a given area of contact for each shank.

It should also be remembered that the above are merely examples of how the present invention could be implemented. Measurement probes are described above, but the present invention would be equally applicable to the attachment of any machine tool accessory (e.g., any type of measurement sensor) to a shank. Although two concentric annuli are shown, the surface could comprise three or more annuli (e.g., for shanks of three or more different radii). An annulus is also only one way the contact face for a particular shank could be implemented. Instead of a continuous ring, the contact face could instead be formed from multiple (e.g., three or more) raised portions of any shape that are circumferentially located around the probe housing surface. Again, such raised contact faces could be higher (i.e., extend further from the plane or the surface) nearer the periphery of the surface. It should also be noted that the heights of the raised contact surfaces are greatly exaggerated in the drawings; these may only be raised a few tens of microns from the surrounding surface. The skilled person would also be fully aware of the many alternative ways the present invention could be implemented in accordance with the teachings provided herein.

## Claims

1. A machine tool accessory, comprising a housing having a connector portion that enables the housing to be secured to a machine tool shank, **characterised in that** the connector portion comprises a surface having one or more raised contact faces for engaging with a substantially flat surface of the machine tool shank.

2. A machine tool accessory according to claim 1, wherein the one or more raised contact faces comprise a first raised contact face that extends circumferentially around a housing axis of the housing, the first raised contact face being radially separated from the housing axis by a first radial distance and protruding from the surrounding surface by a first height.

3. A machine tool accessory according to claim 2, wherein first raised contact face comprises an annulus.

4. A machine tool accessory according to claim 2, wherein the first raised contact face comprises a plurality of first contact face portions that are circumferentially spaced apart around the housing axis.

5. A machine tool accessory according to any one of claims 2 to 4, wherein the first raised contact face is configured to engage a substantially flat surface of a first machine tool shank having a first radius.

6. A machine tool accessory according to any one of claims 2 to 5, wherein the one or more raised contact faces comprise a second raised contact face that extends circumferentially around the housing axis, the second raised contact face being radially separated from the housing axis by a second radial distance and protruding from the surrounding surface by a second height.

7. A machine tool accessory according to claim 6, wherein the second radial distance is greater than the first radial distance and the second height is greater than the first height.

8. A machine tool accessory according to any one of claims 6 to 7, wherein the second raised contact face comprises an annulus.

9. A machine tool accessory according to any one of claims 6 to 7, wherein the second raised contact face comprises a plurality of second contact face portions that are circumferentially spaced apart around the housing axis.

10. A machine tool accessory according to any one of claims 6 to 9, wherein the first raised contact face is configured to engage a substantially flat surface of a first machine tool shank having a first radius, and the second raised contact face is configured to engage a substantially flat surface of a machine tool shank having a second radius, the second radius being greater than the first radius.

11. A machine tool accessory according to any preceding claim, wherein the connector portion includes a protrusion for engagement with a shank to thereby urge the surface of the connector portion into engagement with the substantially flat surface of the machine tool shank.

12. A machine tool accessory according to any preceding claim, wherein the housing comprises a substantially cylindrical housing and the connector portion is provided on the proximal end of the substantially cylindrical housing, the surface of the connector portion extending perpendicularly to the longitudinal axis of the substantially cylindrical housing.

13. A machine tool accessory according to any preceding claim, further comprising a measurement sensor.

14. A kit comprising a machine tool accessory according to any preceding claim and at least one machine tool shank that is configured to be attached to the connector portion of the machine tool accessory.

15. A kit according to claim 14, wherein the at least one machine tool shank comprises a ground, substantially flat surface for engaging the one or more raised contact faces of the surface of the connector portion of the machine tool accessory.
